# EUROPÄISCHE PATENTSCHRIFT

(11) **EP 1 502 085 B1**
(45) Veröffentlichungstag und Bekanntmachung des Hinweises auf die Patenterteilung: **02.09.2015**
(21) Anmeldenummer: 03749875.5
(22) Anmeldetag: 07.05.2003
(51) Int. Cl.: G01F 1/84, G01N 9/32, G01N 11/02

(54) **MESSWANDLER VOM VIBRATIONSTYP**
VIBRATING MEASURING TRANSFORMER
TRANSFORMATEUR DE MESURE DE TYPE A VIBRATIONS

(30) Priorität: 08.05.2002 DE 10220827; 03.07.2002 US 393116 P; 01.08.2002 DE 10235322; 02.08.2002 US 400047 P
(43) Veröffentlichungstag der Anmeldung: 02.02.2005
(73) Patentinhaber: Endress + Hauser Flowtec AG, 4153 Reinach BL 1 (CH)
(72) Erfinder: DRAHM, Wolfgang, 85435 Erding (DE); RIEDER, Alfred, 84034 Landshut (DE)
(74) Vertreter: Andres, Angelika Maria
(86) Internationale Anmeldenummer: PCT/EP2003/004778
(87) Internationale Veröffentlichungsnummer: WO 2003/095950

(56) Entgegenhaltungen:
- EP-A- 1 253 408
- US-A- 6 006 609
- US-A- 6 041 665
- US-B1- 6 397 685
- PATENT ABSTRACTS OF JAPAN vol. 2000, no. 05, 14. September 2000 (2000-09-14) -& JP 2000 055710 A (YOKOGAWA ELECTRIC CORP), 25. Februar 2000 (2000-02-25)
- PATENT ABSTRACTS OF JAPAN vol. 1998, no. 13, 30. November 1998 (1998-11-30) -& JP 10 221146 A (YOKOGAWA ELECTRIC CORP), 21. August 1998 (1998-08-21)

## Beschreibung

Die Erfindung betrifft einen, insb. für eine Verwendung in einem Viskositätsmesser, einem Viskositäts-/Dichtemesser oder einem Viskositäts-/ Massendurchflußmesser geeigneten, Meßwandler vom Vibrationstyp.

Zur Ermittlung einer Viskosität einer in einer Rohrleitung strömenden Flüssigkeit werden oftmals solche Meßgeräte verwendet, die mittels eines wenigstens ein mit der Rohrleitung kommunizierendes Meßrohr umfassenden Meßwandlers vom Vibrationstyp und einer daran angeschlossener Steuer- und Auswerteelektronik, im Fluid Scher- oder auch Reibungskräfte bewirken und von diesen abgeleitet ein die Viskosität repräsentierendes Meßsignal erzeugen.

So sind z.B. in der US-A 45 24 610, der US-A 52 53 533, der US-A 60 06 609 oder der EP-A 1 158 289 In-Line-Viskositätsmesser - also in den Verlauf einer fluidführenden Rohrleitung einsetzbare Viskositätsmesser - mit jeweils einem Meßwandler vom Vibrationstyp beschrieben, welcher Meßwandler auf eine Viskosität eines in einer Rohrleitung strömenden Fluids reagiert und welcher Meßwandler umfaßt:
- ein einziges gerades, im Betrieb vibrierendes Meßrohr zum Führen des Fluids, welches Meßrohr über ein einlaßseitig einmündendes Einlaßrohrstück und über ein auslaßseitig einmündendes Auslaßrohrstück mit der Rohrleitung kommuniziert, sowie
- eine Erregeranordnung, die das Meßrohr im Betrieb zumindest anteilig zu Torsionsschwingungen um eine mit dem Meßrohr fluchtende Schwingungsachse anregt
- eine Sensoranordnung zum örtlichen Erfassen von Vibrationen des Meßrohrs.

Gerade Meßrohre bewirken bekanntlich, zu Torsionsschwingungen um eine mit dem Meßrohr fluchtende Schwingungsachse angeregt, daß im hindurchgeführten Fluid Scherkräfte erzeugt werden, wodurch wiederum den Torsionsschwingungen Schwingungsenergie entzogen und im Fluid dissipiert wird. Daraus resultierend erfolgt eine Bedämpfung der Torsionsschwingungen des Meßrohr zu deren Aufrechterhaltung demzufolge dem Meßrohr zusätzliche Erregerenergie zugeführt werden muß.

Üblicherweise werden die Meßrohre derartiger, z.B. in In-Line-Viskositätsmessern eingesetzter, Meßwandler im Betrieb auf einer momentanen Resonanzfrequenz eines Torsionschwingungs-Grundmodes, insb. bei konstantgeregelter Schwingungsamplitude, angeregt. Ferner ist es üblich, die Meßrohre für die Viskositätsmessung simultan oder alternierend zum Torsionsmode in Biegeschwingungen lateral zur Schwingungsachse anzuregen, und zwar üblicherweise ebenfalls auf einer Resonanzfrequenz eines Biegeschwingungs-Grundmodes, vgl. hierzu auch die eingangs referierte US-A 45 24 610. Da diese Biege-Resonanzfrequenz insb. auch von der momentanen Dichte des Fluids abhängig ist, kann mittels solcher Meßgeräte neben der Viskosität auch die Dichte von in Rohrleitungen strömenden Fluiden gemessen werden. Überdies werden mittels solcher biegeschwingenden Meßrohren im hindurchströmenden Fluid vom momentanen Massendurchfluß abhängige Corioliskräfte induziert, so daß dann mittels solcher Meßwandler auch der Massendurchfluß erfaßbar ist, vgl. hierzu auch die US-A 60 06 609 oder die EP-A 1 158 289. Bei einem Meßwandler vom Vibrationstyp mit einem einzigen geraden Meßrohr ist es, wie auch in der US-A 60 41 665 oder der JP-A 2000055710 gezeigt, aber auch möglich, das jeweilige Meßrohr lediglich zu Torsionsschwingungen anzuregen, um dadurch zur Messung des Massendurchflusses nutzbare Corioliskräfte zu induzieren bzw. um diese Torsionsschwingungen lediglich zur Messung des Massendurchflusses zu nutzen.

Die Verwendung gerader, in der oben beschriebenen Weise vibrierender Meßrohre für die Viskositätsmessung hat im Vergleich zu einer Viskositätsmessung mit gebogenen Meßrohren bekanntermaßen den Vorteil, daß praktisch über die gesamte Meßrohrlänge Scherkräfte im Fluid, insb. auch mit einer hohen Eindringtiefe in radialer Richtung, erzeugt werden und somit eine sehr hohe Empfindlichkeit des Meßaufnehmers auf die zu messende Viskosität erreicht werden kann. Ferner besteht ein Vorteil z.B. auch darin, daß sie praktisch in jeder beliebigen Einbaulage, insb. auch nach einer In-line durchgeführten Reinigung, mit hoher Sicherheit rückstandslos entleert werden können. Ferner sind solche Meßrohre im Vergleich z.B. zu einem omegaförmig oder helixförmig gebogenem Meßrohr wesentlich einfacher und dementsprechend kostengünstiger herzustellen. Demgegenüber besteht ein wesentlicher Nachteil vorbeschriebener Meßwandler darin, daß im Meßbetrieb via Meßrohr und ein ggf. vorhandenes Wandlergehäuse Torsionsschwingungen vom Meßwandler auf die angeschlossene Rohrleitung übertragen werden können, was wiederum zu einer Veränderrung des kalibrierten Nullpunkts und somit zu Ungenauigkeiten im Meßergebnis führen kann. Desweiteren kann das Auskoppeln von Schwingungseneergie in die Umgebung des Meßwandlers zu einer erheblichen Verschlechterung des Wirkungsgrades und ggf. auch zur Verschlechterung des Signal-zu Rausch-Verhältnisses im Meßsignal führen.

Ein Aufgabe der Erfindung besteht daher darin, einen, insb. für einen Viskositätsmesser oder Coriolis-Massedurchfluß-/Viskositätsmesser geeigneten, Meßwandler vom Vibrationstyp anzugeben, der trotz Verwendung nur eines einzigen geraden Meßrohrs im Betrieb dynamisch gut ausbalanciert ist und bei dem ein Erzeugen von Biegemomenten seitens des torsionsschwingenden Meßrohrs weitgehend unterbunden und somit ein Anregen des Gehäuses oder auch der angeschlossenen Rohrleitung zu Resonanzschwingungen wirksam verhindert ist. Darüber hinaus sollen allfällige, den Massendurchfluß repräsentierende Meßsignale, insb. auch bei Verwendung derselben Sensoren wie für die Viskositätsmessung, möglichst gut von den die Viskosität repräsentierenden Meßsignale unterschieden werden können.

Zur Lösung der Aufgabe besteht die Erfindung in einem Meßwandler vom Vibrationstyp mit den Merkmalen des unabhängigen ersten Anspruchs.

Nach einer bevorzugten Ausgestaltung der Erfindung weist das Innenteil eine bezüglich der Torsions-Schwingungsachse im wesentlichen symmetrische Massenverteilung auf.

Nach einer bevorzugten Ausgestaltung der Erfindung ist der Gegenschwinger im wesentlichen rohrförmig ausgebildet und im wesentlich koaxial zum Meßrohr ausgerichtet.

Nach einer bevorzugten Ausgestaltung der Erfindung sind die Meßrohr-Torsionsschwingfrequenz und die Gegenschwinger-Torsionseigenfrequenz möglichst gleich.

Nach einer bevorzugten Ausgestaltung der Erfindung ist die Gegenschwinger-Torsionseigenfrequenz größer als das 0,8-fache der Meßrohr-Torsisonsschwingfrequenz.

Nach einer bevorzugten Ausgestaltung der Erfindung ist die Gegenschwinger-Torsionseigenfrequenz kleiner als das 1,2-fache der Meßrohr-Torsionsschwingfrequenz.

Nach einer bevorzugten Ausgestaltung der Erfindung sind die Meßrohr-Torsionsschwingfrequenz und die Meßrohr-Biegeschwingfrequenz voneinander verschieden eingestellt.

Nach einer bevorzugten Ausgestaltung der Erfindung ist die Erregeranordnung so ausgebildet und an Meßrohr und Gegenschwinger fixiert, daß eine die Biegeschwingungen erzeugende Kraft entlang einer gedachten Kraftlinie auf das Meßrohr wirkt, die außerhalb einer zur ersten Trägheitshauptachse senkrechten zweiten Trägheitshauptachse verläuft oder diese in höchstens einem Punkt schneidet.

Nach einer bevorzugten Ausgestaltung der Erfindung weist die Erregeranordnung eine am Meßrohr fixierte, im Betrieb zumindest zeitweise von einem Erregerstrom durchflossene Erregerspule auf, die über einen mit dem Gegenschwinger verbundenen Hebel und einen darin fixierten Anker auf Meßrohr und Gegenschwinger einwirkt.

Nach einer bevorzugten Ausgestaltung der Erfindung weist die Sensoranordnung eine außerhalb der zweiten Trägheitshautpachse im Meßwandler angeordnete Sensorspule sowie einen mit dieser magnetisch gekoppelten Anker auf, deren relative Lage, insb. auch deren relativer Abstand, aufgrund der Torsions- und ggf. der Biegeschwingungen von Meßrohr und Gegenschwinger verändert wird, wodurch in der Sensorspule zumindest zeitweise eine veränderliche Meßspannung induziert wird.

Nach einer bevorzugten Ausgestaltung der Erfindung umfaßt der Meßwandler ein einlaßseitig und auslaßseitig am Meßrohr fixiertes Wandlergehäuse.

Nach einer bevorzugten Ausgestaltung der Erfindung sind dem Einstellen der Massenverteilung des Innenteils dienende, am Meßrohr fixierte Zusatzmassen und/oder in den Gegenschwinger eingelassene Nuten vorgesehen.

Ein Grundgedanke der Erfindung besteht darin, den Meßwandler dadurch dynamisch zu kompensieren, daß zum einen seitens des Gegenschwingers zu seitens des torsionsschwingenden Meßrohr erzeugten Torsionsmomenten möglichst gleich große Gegen-Torsionsmomente erzeugt werden. Andererseits aber sollen möglichst keine Biegemomente, z.B. aufgrund von verstärkten Pendelbewegungen bei außerhalb des Meßrohrs liegendem Massenschwerpunkt, erzeugt werden.

Darüber hinaus besteht ein weiterer Grundgedanke der Erfindung darin, die Erreger- oder auch die Sensoranordnung so auszulegen, daß einerseits mittels jeweils derselben Erreger- bzw. Sensorspulen, insb. auch simultan, sowohl die Torsions- als auch die Biegeschwingungen des Meßrohrs erzeugt bzw. erfaßt werden können und daß andereseits die erzeugten bzw. erfaßten Torsions- oder Biege-Schwingungen im Meßsignal ohne weiteres voneinander separierbar sind.

Ein Vorteil der Erfindung besteht darin, daß der Meßwandler trotz allfälliger, betriebsbedingter Schwankungen der Dichte und/oder der Viskosität im Fluid, auf einfache und robuste Weise so ausbalanciert ist, daß innere Torsionsmomente von der angeschlossenen Rohrleitung weitgehend fern gehalten werden können. Darüberhinaus kann der Meßwandler zumindest für einen kleinen Dichtebereich auch für Biege-Schwingungen dynamisch ausbalanciert werden. Der erfindungsgemäße Meßwandler zeichnet sich des weiteren dadurch aus, daß er aufgrund dieser konstruktiv sehr einfachen Schwingungsentkopplung zum einen sehr kompakt und zum anderen sehr leicht ausgeführt werden kann.

Ein weitere Vorteil der Erfindung besteht darin, daß die verschiedenen Meßgrößen, insb. der Massendurchfluß, die Viskosität oder auch die Dichte, jedenfalls bei voneinander verschieden eingestellter Meßrohr-Torsisonsschwingfrequenz und Meßrohr-Biegeschwingfrequenz, auch bei gleichzeitig angeregten Torsions- und Biege-Schwingungen gemessen werden können.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1: zeigt ein in eine Rohrleitung einfügbares Meßgerät zum Messen einer Viskosität eines in der Rohrleitung geführten Fluids,
- Fig. 2: zeigt ein Ausführungsbeispiel für einen für das Meßgerät von Fig. 1 geeigneten Meßwandler vom Vibrations-Typ in einer perspektivischen Seitenansicht,
- Fig. 3: zeigt den Meßwandler von Fig. 2 geschnitten in einer Seitenansicht,
- Fig. 4: zeigt den Meßwandler von Fig. 2 in einem ersten Querschnitt,
- Fig. 5: zeigt den Meßwandler von Fig. 2 in einem zweiten Querschnitt und
- Fig. 6: zeigt ein weiteres Ausführungsbeispiele für einen für das Meßgerät von Fig. 1 geeigneten Meßwandler vom Vibrations-Typ geschnitten in einer Seitenansicht.

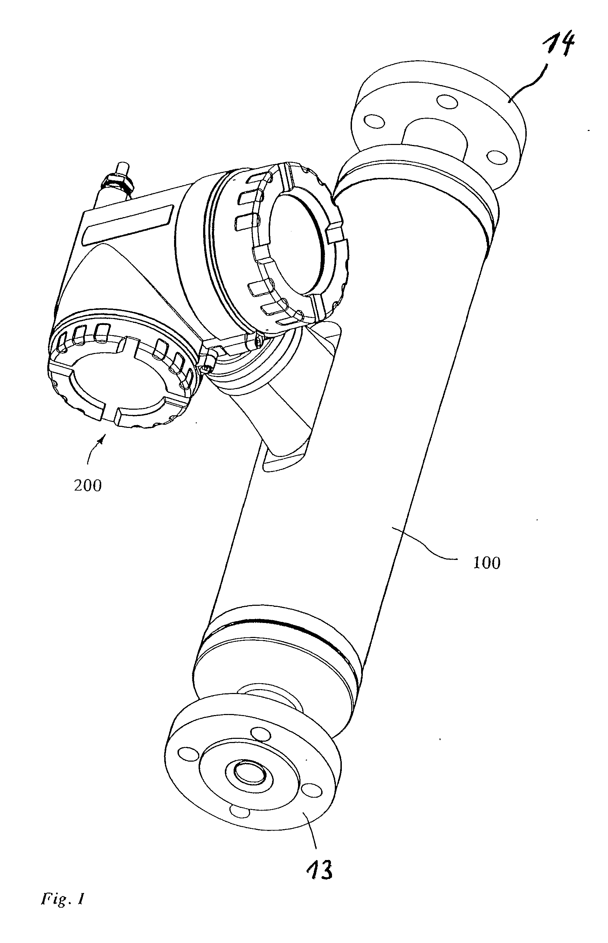

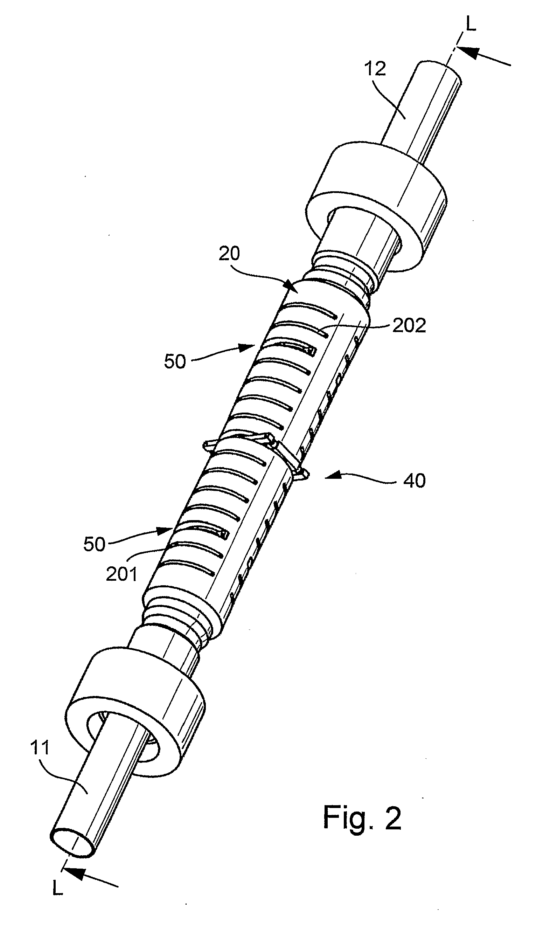

In der Fig. 1 ist ein in eine - hier nicht gezeigte - Rohrleitung einfügbares Meßgerät zum Messen einer Viskosität eines in der Rohrleitung geführten Fluids dargestellt. Darüber hinaus ist das Meßgerät bevorzugt auch zur Messung eines Massendurchflusses und/oder einer Dichte des Fluids vorgesehen. Das Meßgerät umfaßt einen Meßwandler vom Vibrationstyp der im Betrieb vom zu messenden Fluid durchströmt ist. In den Fig. 2 bis 6 sind entsprechende Ausführungsbeispiele und Ausgestaltungen für solche Meßwandler vom Vibrationstyp schematisch dargestellt.

Der Meßwandler dient dazu, in einem hindurchströmenden Fluid mechanische Reaktionskräfte, insb. viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. eine Viskosität η des Fluids gemessen werden.

Zum Führen des Fluids umfaßt der Meßwandler ein, insb. einziges, im wesentlichen gerades Meßrohr 10 von vorgebbarem Meßrohrdurchmesser, das im Betrieb zumindest zeitweise vibrieren gelassen und somit wiederholt elastisch verformt wird.

Zum Hindurchströmenlassen des Fluids ist das Meßrohr 10 über ein in ein Einlaßende 11# einmündendes Einlaßrohrstück 11 und über ein in ein Auslaßende 12# einmündendes Auslaßrohrstück 12 an eine das Fluid zu- bzw. abführende, hier nicht dargestellte, Rohrleitung angeschlossen. Meßrohr 10, Einlaß- und Auslaßrohrstück 11, 12 sind zueinander und zu einer gedachten Meßrohrlängsachse L möglichst fluchtend ausgerichtet und in vorteilhafter Weise einstückig ausgeführt, so daß zu deren Herstellung z.B. ein einziges rohrförmiges Halbzeug dienen kann; falls erforderlich können Meßrohr 10 und Rohrstücke 11, 12 aber auch mittels einzelner, nachträglich zusammengefügter, z.B. zusammengeschweißter, Halbzeuge hergestellt werden. Zur Herstellung des Meßrohrs 10 kann hierbei praktisch jedes der für solche Meßwandler üblichen Materialien, wie z.B. Stahl, Titan, Zirkonium etc., verwendet werden.

Für den Fall, daß der Meßwandler lösbar mit der Rohrleitung zu montieren ist, ist dem Einlaßrohrstück 11 und dem Auslaßrohrstück 12 bevorzugt jeweils ein erster bzw. zweiter Flansch 13, 14 angeformt; falls erforderlich können Ein- und Auslaßrohrstück 11, 12 aber auch direkt mit der Rohrleitung, z.B. mittels Schweißen oder Hartlötung, verbunden werden. Ferner ist, wie in den Fig. 1 schematisch dargestellt, am ein Ein- und am Auslaßrohrstück 11, 12 fixiertes, das Meßrohr 10 aufnehmendes Wandlergehäuse 100 vorgesehen, vgl. hierzu Fig. 1 und 2.

Gerade Meßrohre können, zu Torsionsschwingungen um eine Torsions-Schwingungsachse angeregt, bewirken, daß im hindurchgeführten Fluid Scherkräfte erzeugt und dadurch den Torsionsschwingungen Schwingungsenergie entzogen und im Fluid dissipiert. Daraus resultierend erfolgt eine Bedämpfung der Torsionsschwingungen des jeweils schwingenden Meßrohrs zu deren Aufrechterhaltung demzufolge dem Meßrohr zusätzliche Erregerenergie zugeführt werden muß. Dementsprechend wird das Meßrohr 10 zum Erzeugen von mit der Viskosität korrespondierenden Reibungskräften im Fluid im Betrieb zumindest zeitweise so zu Torsionsschwingungen um eine Torsions-Schwingungsachse angeregt, insb. im Bereich einer natürlichen Torsions-Resonanzfrequenz, daß es im wesentlichen gemäß einer natürlichen Torsionsschwingungsform um seine Meßrohrlängsachse L oder um eine zu dieser weitgehend parallelen Achse verdrillt wird, vgl. hierzu z.B. auch die US-A 45 24 610, die US-A 52 53 533, die US-A 60 06 609 oder die EP-A 1 158 289.

Bevorzugt wird das Meßrohr 10 dabei im Betrieb mit einer Torsionsschwingungs-Frequenz angeregt, die möglichst genau einer natürlichen Resonanzfrequenz jenes Grund-Torsionseigenmodes entspricht, bei dem das tordierende Meßrohr 10 über seine gesamte Länge im wesentlichen gleichgerichtet verdreht wird. Eine natürliche Resonanzfrequenz dieses Grund-Torsionseigenmodes kann bei einem als Meßrohr 10 dienenden Edelstahlrohr mit einer Nennweite von 20 mm, einer Wandstärke von etwa 1,2 mm und einer Länge von etwa 350 mm sowie allfälligen Anbauten (s. u.), beispielsweise bei etwa 1500 Hz bis 2000 Hz liegen.

Nach einer bevorzugten Weiterbildung der Erfindung wird das Meßrohr 10 im Betrieb des Meßwandlers zusätzlich zu den Torsionsschwingungen, insb. simultan zu diesen, zu Biegeschwingungen so angeregt, daß es sich im wesentlichen gemäß einer natürlichen ersten Biegeschwingungsform lateral ausbiegt. Bevorzugt wird das Meßrohr 10 dazu mit einer Biegeschwingungs-Frequenz angeregt, die möglichst genau einer niedrigsten natürlichen Biege-Resonanzfrequenz des Meßrohrs 10 entspricht, so daß also das vibrierende, jedoch nicht vom Fluid durchströmte Meßrohr 10 bezüglich einer zur Meßrohrlängsachse L senkrechten Mittelachse im wesentlichen symmetrisch ausgebogen wird und dabei einen einzigen Schwingungsbauch aufweist. Diese niedrigste Biege-Resonanzfrequenz kann beispielsweise bei einem als Meßrohr 10 dienenden Edelstahlrohr mit einer Nennweite von 20 mm, einer Wandstärke von etwa 1,2 mm und einer Länge von etwa 350 mm sowie den üblichen Anbauten bei etwa 850 Hz bis 900 Hz liegen.

Für den Fall, daß das Fluid in der Rohrleitung strömt und somit ein Massendurchfluß *m* von Null verschieden ist, werden so mittels biegeschwingenden Meßrohrs 10 im hindurchströmenden Fluid Corioliskräfte induziert. Diese wiederum wirken auf das Meßrohr 10 zurück und bewirken so eine zusätzliche, sensorisch erfaßbare, hier jedoch nicht dargestellte, Verformung des Meßrohrs 10 gemäß einer natürlichen zweiten Biegeschwingungsform, die der ersten Biegeschwingungsform koplanar überlagert ist. Die momentane Ausprägung der Verformung des Meßrohrs 10 ist dabei, insb. hinsichtlich ihrer Amplituden, auch vom momentanen Massendurchfluß *m* abhängig. Als zweite Biegeschwingungsform, dem sogenannten Coriolismode, können z.B., wie bei derartigen Meßwandlern üblich, anti-symmetrische Biegeschwingungsformen mit zwei Schwingungsbäuchen oder mit vier Schwingungsbäuchen dienen.

Wie bereits erwähnt, werden die Torsionsschwingungen einerseits durch eine erwünschte und, insb. zum Zwecke der Viskositätsmessung, sensorisch erfaßte Energieabgabe an das Fluid bedämpft. Andererseits aber kann dem vibrierenden Meßrohr 10 auch dadurch Schwingungsenergie entzogen werden, daß mit diesem mechanisch gekoppelte Bauteile, wie z.B. das Gehäuse 100 oder die angeschlossene Rohrleitung, ebenfalls zu Schwingungen angeregt werden. Während die, wenn auch unerwünschte, Energieabgabge an das Gehäuse 100 noch kalibrierbar wäre, so erfolgt jedoch zumindest die Energieabgabe an die Umgebung des Meßwandlers, insb. die Rohrleitung, in einer praktisch nicht mehr reproduzier- oder gar vorherbestimmbaren Weise.

Zum Zwecke der Unterdrückung einer solchen Abgabe von Torsions-Schwingungsenergie an die Umgebung ist im Meßwandler ferner ein einlaßseitig und auslaßseitig am Meßrohr 10 fixierter Gegenschwinger 20 vorgesehen.

Der Gegenschwinger 20 dient dazu, solche Torsions-Momente, die vom vorzugsweise um seine Längsachse L tordierenden einzigen Meßrohr 10 erzeugt werden, weitgehend kompensierende Gegen-Torsionsmomente zu erzeugen und somit die Umgebung des Meßwandlers, insb. aber die angeschlossene Rohrleitung, weitgehend frei von dynamischen Torsionsmomenten zu halten. Darüberhinaus dient der Gegenschwinger 20 für den oben beschriebenen Fall, daß das Meßrohr 10 im Betrieb zusätzlich zu Biegeschwingungen angeregt wird, außerdem dazu, den Meßwandler für genau einen vorherbestimmten, z.B. einen im Betrieb des Meßwandlers am häufigsten zu erwartenden oder auch kritischen Fluiddichtewert soweit dynamisch auszubalancieren, daß im vibrierenden Meßrohr 10 allfällig erzeugte Querkräfte und/oder Biegemomente weitgehend kompensiert werden, vgl. die hierzu auch die eigene europäische Patentanmeldung EP1253408A.

Zu diesen Zwecken wird der, im Vergleich zum Meßrohr 10 bevorzugt ebenfalls torsions-und/oder biege-elastische, Gegenschwinger 20 im Betrieb zum Meßrohr 10 außerphasig, insb. gegenphasig, torsionsschwingen gelassen. Dementsprechend ist der Gegenschwinger 20 mit wenigstens einer seiner Gegenschwinger-Torsionseigenfrequenzen möglichst genau auf die Meßrohr-Torsionsschwingfrequenz abgestimmt, mit der dieses im Betrieb schwingen gelassen wird. Jedenfalls aber sind Meßrohr 10 und Gegenschwinger 20 so aufeinander abgestimmt und ist der Gegenschwinger 20 so am Meßrohr 10 fixiert, daß das Einlaßrohrstück 11 und das Auslaßrohrstück 12 auch bei torsionsschwingendem Meßrohr 10 und mitschwingengelassenem Gegenschwinger 20 weitgehend torsionsspannungsfrei gehalten sind; ggf. ist der Gegenschwinger 20 auch in einer seiner Gegenschwinger-Biegeeigenfrequenz zur Meßrohr-Biegeschwingfrequenz möglichst gleich eingestellt und wird der Gegenschwinger 20 im Betrieb des Meßwandlers ggf. auch zu Biegeschwingungen angeregt, die im wesentlichen koplanar zu allfälligen Biegeschwingungen des Meßrohrs 10 ausgebildet sind.

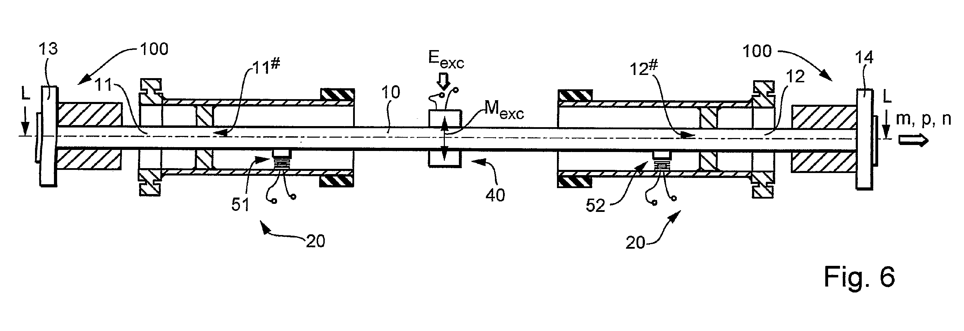

Der Gegenschwinger 20 ist, wie in den Fig. 2 schematisch dargestellt, bevorzugt einstückig ausgeführt. Falls erforderlich, kann der Gegenschwinger 20 auch, wie z.B. auch in der US-A 59 69 265, der EP-A 317 340 oder der WO-A 00 14 485 gezeigt, mehrteilig zusammengesetzt oder mittels zweier separater, einlaß- bzw. auslaßseitig am Meßrohr 10 fixierter Teil-Gegenschwinger realisiert sein, vgl. Fig. 6.

Wie in der Fig. 2, 3 oder 6 schematisch dargestellt, können zur Verbesserung der Meßgenauigkeit oder zur Verringerung der Störanfälligkeit des Meßwandlers das Meßrohr 10, der Gegenschwinger 20 sowie das Einlaßund das Auslaßrohrstück 11, 12 in ihrer jeweiligen Länge ferner so aufeinander abgestimmt werden, daß das Einlaß- und das Auslaßrohrstück 11, 12 im Betrieb ebenfalls elastisch verformt und somit einen Teil der vom Innenteil allfällig abgegebenen Schwingungsenergie aufnehmen können. Bevorzugt sind das Einlaß- und das Auslaßrohrstück 11, 12 in ihren jeweiligen Federsteifigkeit so auf eine Gesamtmasse eines vom Meßrohr 10 und den daran fixierten Anbauten, wie z.B. der Erregeranordnung 40, der Sensoranordnung 50 und ggf. dem Gegenschwinger 20 etc., gebildeten Innenteils abgestimmt, daß eine niedrigste Resonanzfrequenz, insb. aber eine niedrigste Torsions-Resonanzfrequenz, eines derart gebildteten Schwingungssystems niedriger ist als die Torsionsschwingungs-Frequenz mit der das Meßrohr 10 im Betrieb zumindest überwiegend schwingen gelassen wird.

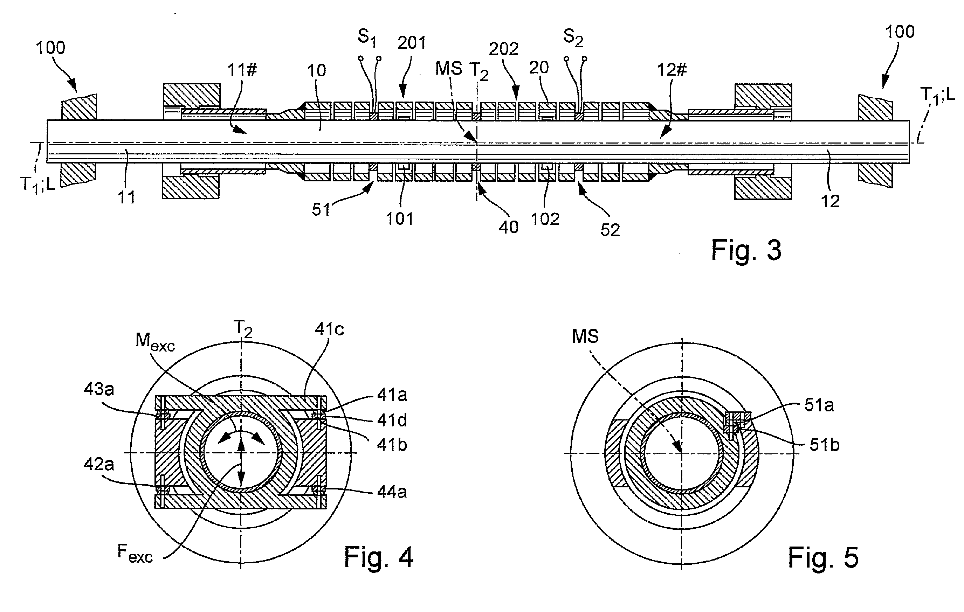

Zum Erzeugen mechanischer Schwingungen des Meßrohrs 10, insb. der erwähnten Torsions- und/oder Biegeschwingungen, umfaßt der Meßwandler ferner eine, insb. elektrodynamische, Erregeranordnung 40. Diese dient dazu, eine von einer, hier nicht dargestellten, Steuer-Elektronik eingespeiste, elektrische Erregerenergie *E_{exc}*, z.B. mit einem geregelten Strom und/oder einer geregelten Spannung, in ein auf das Meßrohr 10, z.B. pulsförmig oder harmonisch, einwirkende und dieses in der vorbeschriebenen Weise elastisch verformendes Erregermoment M*_{exc}* und ggf. eine lateral wirkende Erregerkraft umzuwandeln. Das Erregermoment M*_{exc}* kann hierbei, wie in den Fig. 4 oder 6 schematisch dargestellt, bidirektional oder aber auch unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden. Abgeleitet von der zum Aufrechterhalten der Torsionsschwingungen und ggf. auch der Biegeschwingungen des Meßrohrs 10 erforderlichen elektrischen Erregerenergie *E_{exc}*, kann in der dem Fachmann bekannten Weise die Viskosität des Fluids ermittelt werden, vgl. hierzu insb. auch die US-A 45 24 610, die US-A 52 53 533, die US-A 60 06 609 oder die EP-A 1 158 289.

Als Erregeranordnung 40 kann z.B. eine Tauchspulenanordnung mit einer am Meßrohr 10 oder am Gegenschwinger 20 befestigten zylindrischen Erregerspule, die im Betrieb von einem entsprechenden Erregerstrom durchflossen ist, und mit einem in die Erregerspule zumindest teilweise eintauchenden dauermagnetischen Anker, der am Gegenschwinger 20 bzw. am Meßrohr 10 fixiert ist, dienen. Ferner kann die Erregeranordnung 40 auch, wie z.B. in der US-A 45 24 610 gezeigt, mittels eines oder meherer Elektromagnete realisiert sein.

Zum Detektieren von Schwingungen des Meßrohr 10 umfaßt der Meßwandler des weiteren eine, insb. elektrodynamische, Sensoranordnung 50. Als Sensoranordnung 50 kann z.B. eine für derartige Meßwandler übliche Sensoranordnung verwendet werden, bei der in der dem Fachmann bekannten Weise mittels wenigstens eines ersten Sensors 51, vorzugsweise aber auch mittels eines zweiten Sensors 52 die Bewegungen des Meßrohrs 10, insb. einlaßseitig und auslaßseitig, erfaßt und in entsprechende Sensorsignale S₁, S₂ umgewandelt werden. Als Sensoren 51, 52 können z.B., wie in den Fig. 4, 5 oder 6 schematisch dargestellt, die Schwingungen von Meßrohr 10 und Gegenschwinger 20 relativ messende, elektrodynamische Geschwindigkeitssensoren oder aber elektrodynamische Wegsensoren oder Beschleunigungssensoren verwendet werden. Anstelle elektrodynamischer Sensoranordnungen können ferner auch mittels resistiver oder piezo-elektrischer Dehnungsmeßstreifen messende oder optoelektronische Sensoranordnungen zum Detektieren der Schwingungen des Meßrohrs 10 dienen. Die Sensorsignale können in der dem Fachmann bekannten Weise mittels einer entsprechenden, insb. digitalen, Auswerte-Elektronik in die entsprechenden Meßwerte umgewandelt werden. Sowohl die oben erwähnte Steueer-Eletronik für die Erregeranordnung 40 als auch die mit der Sensoranordnung 50 verbundene Auswerte-Elektronik können in einem, vorzugsweise am Wandlergehäuse 100 befestigten, Elektronikgehäuse 200 untergebracht sein.

Bevorzugt ist die Erregeranordnung 40, wie auch in Fig. 2 und 3 gezeigt, so ausgebildet und im Meßwandler angeordnet, daß sie im Betrieb gleichzeitig, insb. differentiell, auf Meßrohr 10 und Gegenschwinger 20 wirkt. In entsprechender Weise kann auch die Sensoranordnung 50 so ausgelegt und im Meßwandler angeordnet sein, daß durch sie die Vibrationen von Meßrohr 10 und Gegenschwinger 20 differentiell erfaßt werden.

Im oben beschriebenen Fall, daß die Meßrohr-Torsionsschwingfrequenz und die Meßrohr-Biegeschwingfrequenz voneinander verschieden eingestellt sind, kann mittels des Meßwandlers in einfacher und vorteilhafter Weise auch bei simultan angegeregten Torsions- und Biegeschwingungen, z.B. basierend auf einer Signalfilterung oder einer Frequenzanalyse, eine Separierung der einzelnen Schwingungsmoden sowohl in den Erreger- als auch in den Sensorsignalen erfolgen.

Erfindungsgemäß sind, im Gegensatz z.B. zu den Meßwandlern der eingangs erwähnten US-A 60 06 609 oder der EP-A 1 158 289, Meßrohr 10, Gegenschwinger 20 sowie die daran befestigten Sensor- und Erregeranordnungen 40, 50 hinsichtlich ihrer Massenverteilung so aufeinander abgestimmt, daß das so gebildete, mittels des Ein- und am Auslaßrohrstücks 11, 12 aufgehängte Innenteil des Meßwandlers einen Massenschwerpunkt MS aufweist, der zumindest innerhalb des Meßrohrs 10, bevorzugt aber möglichst nah an der Meßrohrlängsachse L liegt. Zudem ist das Innenteil bevorzugt so ausgebildet, daß es eine mit dem Einlaßrohrstück 11 und dem Auslaßrohrstück 12 fluchtende und zumindest abschnittsweise innerhalb des Meßrohrs 10 liegende erste Trägheitshauptachse T₁ aufweist. Aufgrund der Verlegung des Massenschwerpunktes MS des Innenteils, insb. aber auch aufgrund der vorbeschriebenen Lage der ersten Trägheitshauptachse T₁ sind die beiden betriebsgemäß vom Meßrohr 10 eingenommenen und vom Gegenschwinger 20 weitgehend kompensierten Schwingungsformen, nämlich die Torsionsschwingungen und die Biegeschwingungen des Meßrohrs 10, mechanisch voneinander weitestgehend entkoppelt. Dadurch können beide Schwingungsformen in vorteilhafter Weise, insb. auch im Gegensatzt zu den in der US-A 45 24 610, der US-A 52 53 533 oder der US-A 60 06 609 vorgeschlagenen Meßwandlern, nunmehr auch ohne weiteres voneinander getrennt angeregt werden.

Sowohl die Verlegung des Massenschwerpunkts MS als auch der ersten Trägheitshauptachse T₁ hin zur Meßrohrlängsachse L kann beispeilsweise dadurch erheblich vereinfacht werden, daß das Innenteil, also Meßrohr 10, Gegenschwinger 20 sowie die daran befestigten Sensor- und Erregeranordnungen 50, 40, so ausgebildet und zueinander angeordnet sind, daß eine Massenverteilung des Innenteils entlang der Meßrohrlängsachse L im wesentlichen symmetrisch, zumindest aber invariant gegenüber einer gedachten Drehung um die Meßrohrlängsachse L um 180° (c2-Symmetrie), ist.

Nach einer bevorzugten Ausgestaltung der Erfindung ist der bevorzugt rohrförmig, insb. auch weitgehend axial-symmetrisch, ausgebildete Gegenschwinger 20 im wesentlich koaxial zum Meßrohr 10 angeordnet, wodurch das Erreichen einer symmetrische Massenverteilung des Innenteils erheblich vereinfacht wird und somit auch der Massenschwerpunkt MS in einfacher Weise nah zur Meßrohrlängsachse L hin verlegt wird.

Darüber hinaus sind auch die Sensor- und Erregeranordnungen 50, 40 bevorzugt so ausgebildet und zueinander am Meßrohr 10 und ggf. am Gegenschwinger 20 angeordnet, daß ein durch sie erzeugtes Massenträgheitsmoment möglichst konzentrisch zur Meßrohrlängsachse L ausgebildet oder zumindest möglichst klein gehalten ist. Dies kann z.B. dadurch erreicht werden, daß ein gemeinsamer Massenschwerpunkt von Sensor- und Erregeranordnung 50, 40 ebenfalls möglichst nah an der Meßrohrlängsachse L liegt und/oder daß eine Gesamtmasse von Sensor- und Erregeranordnung 50, 40 möglichst klein gehalten ist.

Nach einer weiteren bevorzugten Ausgestaltung der Erfindung ist die Erregeranordnung 40 zum Zwecke der getrennten Anrregung von Torsions- und/oder Biegeschwingungen des Meßrohrs 10 so ausgebildet und an diesem und am Gegenschwinger 20 so fixiert, daß eine die Biegeschwingungen erzeugende Kraft entlang einer gedachten Kraftlinie auf das Meßrohr 10 wirkt, die außerhalb einer zur ersten Trägheitshauptachse T₁ senkrechten zweiten Trägheitshauptachse T₂ verläuft oder letztere in höchstens einem Punkt schneidet. Vorzugsweise ist das Innenteil so ausgestaltet, daß die zweite Trägheitshauptachse T₂ im wesentlichen mit der oben erwähnten Mittelachse übereinstimmt.

Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41 c fixiert ist und über diesen und einen von außen am Gegenschwinger 20 fixierten Anker 41 b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht eine weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 zu fixieren sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41 b vom Meßrohr 10 gehaltert werden können.

Nach einer weiteren bevorzugten Ausgestaltung der Erfindung weist die Erregeranordnung 40, insb. zwecks der Erfüllung der oben genannten Anforderungen an die Massenverteilung, wenigstens eine entlang eines Durchmessers des Meßrohrs 10 angeordnete zweite Erregerspule 42a auf die in gleicher Weise wie die Erregerspule 41 a mit dem Meßrohr 10 und dem Gegenschwinger 20 gekoppelt ist. Nach einer anderen bevorzugten Ausgestaltung der Erfindung weist die Erregeranordnung zwei weitere, insgesamt also vier zumindest bezüglich der zweiten Trägheitshauptachse T₂ symmetrisch angeordnete Erregerspulen 43a, 44a auf, die alle in der vorgenannten Weise im Meßwandler montiert sind.

Die außerhalb der zweiten Trägheitshauptachse T₂ auf das Meßrohr 10 einwirkende Kraft kann mittels solcher Zwei- oder Vier-Spulen-Anordnungen in einfacher Weise z.B. dadurch erzeugt werden, daß eine der Erregerspulen, z.B. die Erregerspule 41a, eine andere Induktivität aufweist als die jeweils anderen oder daß eine der Erregerspulen, z.B. die Erregerspule 41a, im Betrieb von einem Erregerteilstrom durchflossen ist, der von einem jeweiligen Erregerteilstrom der jeweils anderen Erregerspulen verschieden ist.

Nach einer weiteren bevorzugten Ausgestaltung der Erfindung umfaßt die Sensoranordnung 50, wie in Fig. 5 schematisch dargestellt, eine außerhalb der zweiten Trägheitshauptachse T₂ angeordnete, am Meßrohr 10 fixierte Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund der erfindungsgemäßen Anordnung der Sensorspule 51a können in vorteilhafter Weise gleichzeitig sowohl die oben genannten Torsionsschwingungen als auch die ggf. angeregten Biegeschwingungen erfaßt werden. Falls erforderlich können die Sensorspule 51a dazu aber auch am Gegenschwinger 20 und in entsprechender Weise der mit dieser gekoppelte Anker 51b am Meßrohr 10 fixiert sein.

Es sei hier noch erwähnt, daß falls erforderlich, in der dem Fachmann bekannten Weise, die Erregeranordnung 40 und die Sensoranordnung 50 in ihrem mechanischen Aufbau praktisch auch gleich ausgeführt sein können; überdies lassen sich die vorgenannten Ausgestaltungen des mechanischen Aufbaus der Erregeranordnung 40 im wesentlichen auch auf den mechanischen Aufbau der Sensoranordnung 50 übertragen und umgekehrt.

Nach einer bevorzugten Weiterbildung der Erfindung sind dem Einstellen der Massenverteilung des Innteils dienende Nuten 201, 202 vorgesehen, die in den Gegenschwinger 20 eingelassen sind und die ein genaues Einstellen von dessen Torsions-Resonanzfrequenzen und somit z.B. auch eine verbesserte Entkopplung und/oder eine verbesserte Angleichung an die Signalauswertung ermöglichen, vgl. Fig. 2 und 3. Darüber hinaus kann die Massenverteilung des Innenteils, wie ebenfalls in Fig. 3 schematisch dargestellt, auch mittels entsprechender Massenausgleichskörper 101, 102 korrigiert werden, die am Meßrohr 10 fixiert sind. Als Massenausgleichskörper 101, 102 können z.B. auf das Meßrohr 10 aufgeschobene Metallringe oder an diesem fixierte Metallplättchen dienen.

Wie sich aus den vorangegangenen Erläuterungen unschwer erkennen läßt, zeichnet sich der erfindungsgemäße Meßwandler durch eine Vielzahl von Einstellmöglichkeiten aus, die es dem Fachmann, insb. auch noch nach einer Spezifikation von äußeren oder inneren Einbaumaßen, ermöglichen, eine Kompensation von im Meßrohr 10 und ggf. im Gegenschwinger 20 betriebsbedingt erzeugten Torsionskräften mit einer hohen Güte zu erzielen und somit die Abgabe von Torsionsschwingungs-Energie an die Umgebung des Meßwandlers zu minimisieren.

## Patentansprüche

1. Meßwandler vom Vibrationstyp für ein in einer Rohrleitung strömendes Fluid, der umfaßt:
- ein dem Führen des Fluids dienendes, im wesentlichen gerades Meßrohr (10) von vorgebbarem Meßrohrdurchmesser,
-- das über ein in ein Einlaßende (11#) mündendes Einlaßrohrstück (11) und über ein in ein Auslaßende (12#) mündendes Auslaßrohrstück (12) mit der angeschlossenen Rohrleitung kommuniziert und
-- das im Betrieb zumindest zeitweise vibrieren gelassen wird,
- einen am Einlaßende und am Auslaßende fixierten Gegenschwinger (20) von vorgebbarer Gegenschwinger-Torsionseigenfrequenz,
- eine auf das Meßrohr (10) und den Gegenschwinger (20) einwirkende Erregeranordnung (40) zum Vibrierenlassen wenigstens des Meßrohrs (10) und
- eine Sensoranordnung (50) zum Erfassen von Vibrationen des Meßrohrs (10)
- wobei ein zumindest durch das Meßrohr (10), den Gegenschwinger (20) sowie die daran befestigte Sensor- und Erregeranordnung (50, 40) gebildetes und zumindest am Ein- und am Auslaßrohrstück aufgehängtes Innenteil des Meßwandlers einen Massenschwerpunkt aufweist, der innerhalb des Meßrohrs (10), nämlich auf einer, insb. mit dem Einlaßrohrstück und dem Auslaßrohrstück fluchtenden, Meßrohrlängsachse liegt; und
- wobei das Innenteil eine mit dem Einlaßrohrstück und dem Auslaßrohrstück im wesentlichen fluchtende, innerhalb des Meßrohrs liegende erste Trägheitshauptachse aufweist, und
- wobei das Meßrohr (10) zum Erzeugen von Scherkräften im Fluid zumindest anteilig Torsionsschwingungen von vorgebbarer Meßrohr-Torsionsschwingfrequenz um eine gedachte, mit dem Einlaßrohrstück (11) und dem Auslaßrohrstück (12) im wesentlichen fluchtende Torsions-Schwingungsachse, und zum Erzeugen von Corioliskräften im Fluid zumindest zeitweise Biegeschwingungen von vorgebbarer Meßrohr-Biegeschwingfrequenz um die gedachte Meßrohrlängsachse ausführt,
- wobei die Erregeranordnung (40) eingerichtet ist, die Torsionsschwingungen zu erzeugen und
- wobei die Erregeranordnung (40) eingerichtet ist, die Biegeschwingungen, insb. simultan zu den Torsionsschwingungen, zu erzeugen.

2. Meßwandler nach Anspruch 1, wobei die Meßrohrlängsachse mit dem Einlaßrohrstück und dem Auslaßrohrstück fluchtet.

3. Meßwandler nach wenigstens einem der vorherigen Ansprüche, bei dem das Innenteil eine bezüglich der Torsions-Schwingungsachse im wesentlichen symmetrische Massenverteilung aufweist.

4. Meßwandler nach wenigstens einem der vorherigen Ansprüche, bei dem der Gegenschwinger im wesentlichen rohrförmig ausgebildet und im wesentlich koaxial zum Meßrohr ausgerichtet ist.

5. Meßwandler nach wenigstens einem der vorherigen Ansprüche, bei dem die Meßrohr-Torsionsschwingfrequenz und die Gegenschwinger-Torsionseigenfrequenz gleich sind.

6. Meßwandler nach wenigstens einem der vorherigen Ansprüche, bei dem die Gegenschwinger-Torsionseigenfrequenz größer als das 0,8-fache der Meßrohr-Torsisonsschwingfrequenz ist.

7. Meßwandler nach wenigstens einem der vorherigen Ansprüche, bei dem die Gegenschwinger-Torsionseigenfrequenz kleiner als das 1,2-fache der Meßrohr-Torsisonsschwingfrequenz ist.

8. Meßwandler nach einem der vorherigen Ansprüche, bei dem die Meßrohr-Torsionsschwingfrequenz und die Meßrohr-Biegeschwingfrequenz voneinander verschieden eingestellt sind.

9. Meßwandler nach wenigstens einem der vorherigen Ansprüche, bei dem die Erregeranordnung (40) so ausgebildet und an Meßrohr und Gegenschwinger (20) fixiert ist, daß eine die Biegeschwingungen erzeugende Kraft entlang einer gedachten Kraftlinie auf das Meßrohr (10) wirkt, die außerhalb einer zur ersten Trägheitshauptachse senkrechten zweiten Trägheitshauptachse verläuft oder diese in höchstens einem Punkt schneidet.

10. Meßwandler nach wenigstens einem der vorherigen Ansprüche, bei dem die Erregeranordnung (40) eine am Meßrohr (10) fixierte, im Betrieb zumindest zeitweise von einem Erregerstrom durchflossene Erregerspule (41a) aufweist, die über einem mit dem Gegenschwinger verbundenen Hebel (41c) und einem darin fixierten Anker (41b) auf Meßrohr (10) und Gegenschwinger (20) einwirkt.

11. Meßwandler nach wenigstens einem der vorherigen Ansprüche, bei dem die Sensoranordnung (50) eine außerhalb der zweiten Trägheitshauptachse im Meßwandler angeordnete Sensorspule (51a) sowie einen mit dieser magnetisch gekoppelten Anker (51b) aufweist, deren relative Lage, insb. auch deren relativer Abstand, aufgrund der Torsions- und ggf. der Biegeschwingungen von Meßrohr (10) und Gegenschwinger (20) verändert wird, wodurch in der Sensorspule (51a) zumindest zeitweise eine veränderliche Meßspannung induziert wird.

12. Meßwandler nach wenigstens einem der vorherigen Ansprüche, bei dem der Meßwandler ein einlaßseitig und auslaßseitig am Meßrohr (10) fixiertes Wandlergehäuse (100) umfaßt.

13. Meßwandler nach wenigstens einem der vorherigen Ansprüche, bei dem dem Einstellen der Massenverteilung des Innteils dienende, am Meßrohr (10) fixierte Zusatzmassen (101, 102) und/oder in den Gegenschwinger (20) eingelassene Nuten (201, 202) vorgesehen sind.

14. Meßgerät zum Messen einer Viskosität eines in der Rohrleitung geführten Fluids, welches Meßgerät einen Meßwandler nach einem der vorherigen Ansprüche umfaßt.

15. Meßgerät zum Messen einer Viskosität sowie eines Massendurchflusses eines in der Rohrleitung geführten Fluids, welches Meßgerät einen Meßwandler nach einem der Ansprüche 1 bis 13 umfaßt.

## Claims

1. Vibronic-type transducer for a fluid flowing through a pipe, comprising:
- an essentially straight measuring tube (10) of a predefinable measuring tube diameter, designed to convey the fluid
-- which communicates with the connected pipe via an inlet pipe element (11) which opens into an inlet end (11#) and an outlet pipe element (12) which opens into an outlet end (12#) and
-- which is made to vibrate at least temporarily during operation,
- a counter-oscillator (20) of a predefinable counter-oscillator natural torsional frequency which is fixed at the inlet end and outlet end,
- an exciter arranger (40) acting on the measuring tube (10) and the counter-oscillator (20), designed to make at least the measuring tube (10) vibrate, and
- a sensor arrangement (50) designed to record vibrations of the measuring tube (10),
- wherein an interior part of the transducer, formed at least by the measuring tube (10), the counter-oscillator (20) and the sensor and exciter arrangement (50, 40) secured thereon, and suspended at least on the inlet pipe element and the outlet pipe element, has a centre of gravity that is located inside the measuring tube (10), namely on a longitudinal axis of the measuring tube that is aligned with the inlet pipe element and the outlet pipe element; and
- wherein the interior part has a first principal axis of inertia which is inside the measure tube and is aligned with the inlet pipe element and the outlet pipe element, and
- wherein, in order to generate shear forces in the fluid, the measuring tube (10) performs at least in part torsional vibrations of a predefinable measuring tube torsional vibration frequency around an imaginary torsional vibration axis which is essentially aligned with the inlet pipe element (11) and the outlet pipe element (12), and, in order to generate Coriolis forces in the fluid, at least temporarily performs flexural vibrations of a predefinable measuring tube flexural vibration frequency around the imaginary measuring tube longitudinal axis,
- wherein the exciter arrangement (40) is configured to generate the torsional vibrations and
- wherein the exciter arrangement (40) is configured to generate the flexural vibrations, particularly simultaneously with the torsional vibrations.

2. Transducer as claimed in Claim 1, wherein the longitudinal axis of the measuring tube is aligned with the inlet pipe element and the outlet pipe element.

3. Transducer as claimed in at least one of the previous claims wherein the interior part has an essentially symmetrical mass distribution in relation to the torsional vibration axis.

4. Transducer as claimed in at least one of the previous claims wherein the counter-oscillator has an essentially tubular shape and is aligned with the measuring tube in an essentially coaxial manner.

5. Transducer as claimed in at least one of the previous claims, wherein the measuring tube torsional vibration frequency and the counter-oscillator torsional natural frequency are equal.

6. Transducer as claimed in at least one of the previous claims, wherein the counter-oscillator torsional natural frequency is greater than 0.8 times the measuring tube torsional vibration frequency.

7. Transducer as claimed in at least one of the previous claims, wherein the counter-oscillator torsional natural frequency is smaller than 1.2 times the measuring tube torsional vibration frequency.

8. Transducer as claimed in one of the previous claims, wherein the measuring tube torsional vibration frequency and the measuring tube flexural vibration frequency are set differently to one another.

9. Transducer as claimed in at least one of the previous claims, wherein the exciter arrangement (40) is designed and fixed on the measuring tube and the counter-oscillator (20) in such a way that a force generating the flexural vibrations along an imaginary force line acts on the measuring tube (10), said line extending outside a second principal axis of inertia which is perpendicular to the first principal axis of inertia or cuts this axis at one point at most.

10. Transducer as claimed in at least one of the previous claims, wherein the exciter arrangement (40) has an exciter coil (41 a) which is fixed on the measuring tube (10) and through which, during operation, an exciter current flows at least temporarily, said coil acting on the measuring tube (10) and the counter-oscillator (20) via a lever (41 c) connected with the counter-oscillator and an anchor (41 b) fixed therein.

11. Transducer as claimed in at least one of the previous claims, wherein the sensor arrangement (50) has a sensor coil (51 a) located in the transducer outside the second principal axis of inertia and an anchor (51 b) magnetically coupled to said coil, whose relative position, in particular its relative distance, is changed on account of the torsional and, where applicable, flexural vibrations of the measuring tube (10) and the counter-oscillator (20), as a result of which a variable measuring voltage is induced at least temporarily in the sensor coil (51 a).

12. Transducer as claimed in at least one of the previous claims, wherein the transducer comprises a transducer housing (100) which is fixed to the measuring tube (10) on the inlet and outlet side.

13. Transducer as claimed in at least one of the previous claims, wherein additional mass elements (101, 102) fixed on the measuring tube and/or grooves (201, 202) in the counter-oscillator (20) are provided to regulate the mass distribution of the interior part.

14. Measuring device for measuring a viscosity of a fluid transported in a pipe, said measuring device comprising a transducer as claimed in one of the previous claims.

15. Measuring device for measuring a viscosity and a mass flow of a fluid transported in the pipe, said measuring device comprising a transducer as claimed in one of the Claims 1 to 13.

## Revendications

1. Transducteur du type à vibration pour un fluide s'écoulant dans une conduite, lequel comprend :
- un tube de mesure (10) pour l'essentiel droit d'un diamètre prédéfinissable, servant à guider le fluide
-- qui communique avec la conduite raccordée par l'intermédiaire d'un segment de tube d'entrée (11) aboutissant dans une extrémité d'entrée (11#) et par l'intermédiaire d'un segment de tube de sortie (12) aboutissant dans une extrémité de sortie (12#) et
-- qui est, pendant le fonctionnement, au moins temporairement fait entré en vibrations,
- un contre-vibrateur (20) fixé à l'extrémité d'entrée et à l'extrémité de sortie, dont la fréquence propre de torsion est prédéfinissable,
- un circuit excitateur (40) agissant sur le tube de mesure (10) et le contre-vibrateur (20), destiné à faire entrer en vibrations au moins le tube de mesure (10) et
- un circuit capteur (50) destiné à la mesure des vibrations du tube de mesure (10),
- pour lequel la partie intérieure du transducteur, formée par le tube de mesure (10), le contre-vibrateur (20) ainsi que les circuits capteur et excitateur (50, 40) qui y sont fixés, et suspendue au moins au niveau des segments de tube d'entrée et de sortie, présente un centre de gravité se situant à l'intérieur du tube de mesure (10), à savoir sur un axe de tube de mesure notamment aligné avec le segment de tube d'entrée et le segment de tube de sortie ; et
- pour lequel la partie intérieure présente un axe principal d'inertie situé à l'intérieur du tube de mesure, aligné pour l'essentiel avec le segment de tube d'entrée et le segment de tube de sortie, et
- pour lequel le tube de mesure (10) exécute pour la génération de forces de gravité dans le fluide au moins partiellement des vibrations de torsion d'une fréquence des vibrations de torsion du tube de mesure prédéfinissable autour d'un axe de vibration de torsion imaginaire, lequel axe est aligné pour l'essentiel avec le segment de tube d'entrée (11) et le segment de tube de sortie (12), et pour la génération de forces de Coriolis dans le fluide au moins temporairement des vibrations de flexion d'une fréquence des vibrations de flexion du tube de mesure prédéfinissable autour de l'axe longitudinal imaginaire du tube de mesure,
- pour lequel le circuit excitateur (40) est configuré de manière à générer les vibrations de torsion et
- pour lequel le circuit excitateur (40) est configuré de manière à générer les vibrations de flexion, notamment simultanément avec les vibrations de torsion.

2. Transducteur selon la revendication 1, pour lequel l'axe longitudinal du tube de mesure est aligné avec le segment de tube d'entrée et le segment de tube de sortie.

3. Transducteur selon au moins l'une des revendications précédentes, pour lequel la partie intérieure présente pour l'essentiel une répartition des masses symétrique par rapport à l'axe de vibration de torsion.

4. Transducteur selon au moins l'une des revendications précédentes, pour lequel le contre-vibrateur est conçu pour l'essentiel en forme tubulaire et est aligné pour l'essentiel de façon coaxiale par rapport au tube de mesure.

5. Transducteur selon au moins l'une des revendications précédentes, pour lequel la fréquence des vibrations de torsion du tube de mesure et la fréquence propre de torsion du contre-vibrateur sont égales.

6. Transducteur selon au moins l'une des revendications précédentes, pour lequel la fréquence propre de torsion du contre-vibrateur est supérieure à 0,8 fois la fréquence des vibrations de torsion du tube de mesure.

7. Transducteur selon au moins l'une des revendications précédentes, pour lequel la fréquence propre de torsion du contre-vibrateur est supérieure à 1,2 fois la fréquence des vibrations de torsion du tube de mesure

8. Transducteur selon au moins l'une des revendications précédentes, pour lequel la fréquence des vibrations de torsion du tube de mesure et la fréquence des vibrations de flexion du tube de mesure sont réglées différemment l'une de l'autre.

9. Transducteur selon au moins l'une des revendications précédentes, pour lequel le circuit excitateur (40) est conçu et fixé sur le tube de mesure et le contre-vibrateur de telle sorte qu'une force générant les vibrations de flexion le long d'une ligne de force imaginaire agit sur le tube de mesure (10), laquelle ligne s'étend en dehors d'un deuxième axe principal d'inertie perpendiculaire au premier axe principal d'inertie, ou coupe celui-ci au maximum en un point.

10. Transducteur selon au moins l'une des revendications précédentes, pour lequel le circuit excitateur (40) comporte une bobine d'excitation (41a) parcourue, en fonctionnement, au moins temporairement par un courant d'excitation, fixée sur le tube de mesure (10), laquelle bobine agit sur le tube de mesure (10) et le contre-vibrateur (20) par l'intermédiaire d'un levier (41 c) relié avec le contre-vibrateur et avec un noyau (41 b) qui y est fixé.

11. Transducteur selon au moins l'une des revendications précédentes, pour lequel le circuit capteur (50) comporte une bobine de capteur (51 a) disposée dans le transducteur à l'extérieur du deuxième axe principal d'inertie, ainsi qu'un noyau (51 b) couplé magnétiquement à la bobine, dont leur position relative, notamment également leur distance relative, est modifiée en raison des vibrations de torsion et, le cas échéant, de flexion du tube de mesure (10) et du contre-vibrateur (20), ce par quoi une tension de mesure variable est induite au moins temporairement dans la bobine de capteur (51a).

12. Transducteur selon au moins l'une des revendications précédentes, pour lequel le transducteur comprend un boîtier de transmetteur (100) fixé côté entrée et côté sortie sur le tube de mesure (10).

13. Transducteur selon au moins l'une des revendications précédentes, pour lequel sont prévues des masses supplémentaires (101, 102) fixées sur le tube de mesure et/ou des rainures encastrées (201, 202) dans le contre-vibrateur (20), servant au réglage de la répartition des masses de la partie intérieure.

14. Appareil de mesure destiné à la mesure d'une viscosité d'un fluide guidé dans la conduite, lequel appareil de mesure comprend un transducteur d'après l'une des revendications précédentes.

15. Appareil de mesure destiné à la mesure d'une viscosité ainsi que d'un débit massique d'un fluide guidé dans la conduite, lequel appareil de mesure comprend un transducteur d'après l'une des revendications 1 à 13.
